**Europäisches Patentamt**

**(19)** **European Patent Office**

**Office européen des brevets**

**(11)** Publication number : **0 324 781 B1**

**(12)** # EUROPEAN PATENT SPECIFICATION

**(45)** Date of publication of patent specification :
20.05.92 Bulletin 92/21

**(51)** Int. Cl.⁵ : **B62D 55/26**

**(21)** Application number : **87906688.4**

**(22)** Date of filing : **08.10.87**

**(86)** International application number :
**PCT/SE87/00455**

**(87)** International publication number :
**WO 88/02717 21.04.88 Gazette 88/09**

**(54)** DEVICE IN MATS OR DRIVING BELTS FOR SNOW VEHICLES.

**(30)** Priority : **10.10.86 SE 8604303**

**(43)** Date of publication of application :
**26.07.89 Bulletin 89/30**

**(45)** Publication of the grant of the patent :
**20.05.92 Bulletin 92/21**

**(84)** Designated Contracting States :
**AT CH DE FR IT LI**

**(56)** References cited :
**AT-A- 327 705**

**(56)** References cited :
**CH-A- 560 624**
**DE-A- 2 714 531**
**SE-B- 355 331**
**US-A- 3 390 924**

**(73)** Proprietor : **Hägglunds Vehicle AB**
**S-891 82 Oernsköldsvik (SE)**

**(72)** Inventor : **Björklund, Roy**
**Furuvägen 26**
**S-871 52 Härnösand (SE)**

**(74)** Representative : **Sedvall, Bengt Gustaf**
**B. Sedvall Patentbyra Box 7182**
**S-103 88 Stockholm (SE)**

EP 0 324 781 B1

## Description

The present invention relates to a device in driving mats or driving belts for snow vehicles, to which mats are fixed rails or strips extending transversely to the direction of motion of the mat.

These rails or strips are intended to improve the capacity of the vehicle to advance on snow or ice by being shaped as grab members, which dig down into the ground and produce a driving engagement between the latter and the driving mat or belt. An example of use of such driving mat is constituted by piste preparing machines for conditioning ski slopes, even if the invention naturally is not limited to this use.

In known machines such as discosed in AT-B-327 705, e.g. piste preparing machines, the rails or strips are fixed onto the outside of the mat by means of a through-bolt which on the underside of the mat is fixed by means of a nut and a washer plate between this latter and the mat. The rail and the washer plate are shaped as continuous fillets which extend over the entire breadth of the driving mat on the one side of the piste preparing machine.

During operation of the machine the rails are exposed to great breaking and torsional stresses, and it happens that one or several rails are bent and even broken. One problem in this connection is that the whole rail must be exchanged, and since it is directly inserted into the driving mat, it occurs most frequently that the driving mat, which is made of rubber, has been torn to pieces and has got loose. In order to become capable of replacing damaged rails the mat must be cut up in order to render possible to reach the underlying nuts and all bolts and often the damaged mat must also be replaced. Already the work of replacing damaged rails in cold and dark is laborious, and if in addition the driving mat must be repaired or exchanged, the work will be extremely troublesome and time-vasting.

The main object of the invention is to produce a device for driving mats or belts for snow vehicles, with which the drawbacks and problems mentioned above are avoided. This is accomplished according to the invention thereby that the device has received the characteristic features stated in the following patent claims.

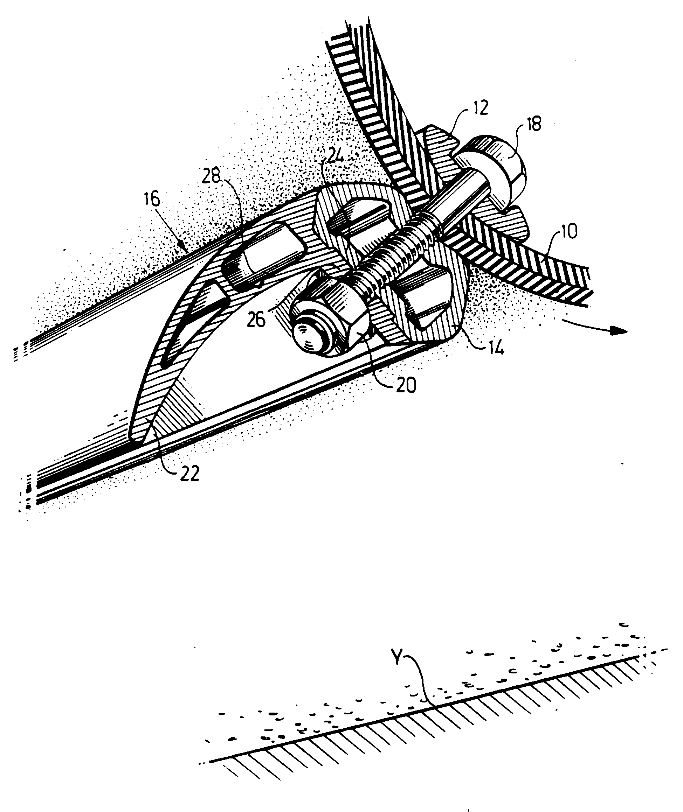

The invention will be described nearer in the following in connection with the drawing on which a preferred embodiment of the device is shown The figure shows a perspective view of a part of a driving mat with a rail or washer plate according to the invention inserted into the mat.

The driving mat which usually is of rubber and consists of one or several layers, is denoted 10 in the figure and shown in a slightly bent shape. According to the invention, the rail comprises three parts, viz. a washer plate 12 destined to be applied to the underside of the driving mat, a fixing or base part 14 and a grab profile 16, which two last-mentioned parts are applied to the outside of the driving mat facing the base (ground). For keeping the parts together, there is provided a through-passing bolt 18 with nut 20. The bolt 18 is guided from the underside of the driving mat 10 through a through-passing hole in the washer plate 12 and the mat 10 and is treaded into the fixing part 14. The fixing part 14 is constituted by a hollow profile for reducing the weight and the production cost, and the bolt 18 is preferably threaded into the lower as well as the upper metal of the fixing part 14. Thus, the washer plate 12 and the fixing part 14 can be drawn together on both sides of the driving mat 10 with the same squeezed together between the washer plate 12 and the fixing part 14. In this way a stable securing device is formed straightly across the breadth of the driving mat 10.

According to the invention there is fixed onto the upper surface of the securing device formed by the washer plate 12 and the fixing part 14 the grab profile 16, which rests on the surface turned away from the mat 10 of the fixing part 14 and is held fast by means of the bolt 18 which projects over said surface of the fixing part 14 sufficiently to take up the grab profile 16 and the nut 20 bearing against the surface of the grab profile. The grab profile 16 is formed with a clutch 22, which constitutes that member that transfers the motive power from the mat 10 to the ground, such as snow or ice. According to the invention this clutch 22 has a hook shape, which results in a considerably more favourable engaging process between the strip 16 and the snow or ice surface than the previously known rectangular rails or strips. Thus the driving mat 10 moves to the right in the direction of the arrow in the drawing and the rail or strip 16 will then engage with the clutch slightly obliquely backwards seen in the direction of motion of the machine into the ground surface denoted in the drawing with Y. Hereunder the clutch 22 digs better into the ground and provides for an extraordinary transfer of the motive power of the machine from the mat 10 to the ground Y.

For securing a stable fixing between the fixing part 14 and the grap profile 16 the fixing part 14 on its face contacting the grap profile 16 is shaped with a recess 24 and the grap profile 16 with a corresponding projection 26 which descends into the recess 24 and keeps the parts 14, 16 laterally undisplaceable relatively to one another when the nut 20 has been tightened. The washer plate 12 and the profiles 14, 16 are long-stripped members extending over the entire breadth of the driving mat 10, for which reason it is obvious that a plurality of bolts 18 and nuts are disposed along said parts, even if only one bolt and one nut are shown in the drawing. The grap profile 16 also is a hollow profile for reduction of the weight and the production cost, but the hollow profile offers in addition a possibility of procuring in a simple way an indication of fracture 28 in that portion of the rail where the clutch 22 passes over into the plane fixing part of the grap profile with the projection 26. This indication of fracture 28 is positioned and dimensioned so in relation to the other details of the rail that in response to an unnormal stress on the rail or strip on the grap profile 16 will be broken off at the place 28. By providing the rail with this indication of fracture 28 a possible overload is not transferred to the fixing part 14 and the driving mat 10, but instead thereof the clutch 22 is broken off. Thus, instead of the whole rail becoming bent as in previously known devices, the grap profile 16 is destroyed whereas the lower portion 14 is preserved and remains straight while it at the same tire continues as before in keeping together the driving mat 10 without any risk that said driving mat is damaged or broken. The work of replacing the profile part may consist either therein that the machine is stopped and left and the profile part 16 that has become defective is removed, whereupon it is possible to go on with the drive, or that the nuts 20 are loosened on the upper side of the driving mat and the defect profile part 16 is exchanged for a new one. Thus, it is no longer necessary to disassemble the mat 10 for becoming able to exchange the rail for a new one, but the exchange of a rail can be effected in a very short time, say ten minutes or the like.

Another problem with previously known rails is that they have been plane and thus exercised a spot pressure onto the driving mat 10 when this latter passes around those wheels which are disposed at the ends of the vehicle for conducting the endless driving mat 10 around in its path. This problem has been solved according to the invention in such a way that the underside of the fixing part 14 facing the driving mat is shaped concave with approximately the same radius as the turning wheels in the driving mechanism, while the side of the washer plate 12 facing the driving mat 10 has a corresponding convex form. In this way pre-stressing is obtained in the driving mat which results in that the same easier turns around the driving wheels without local pressures and bendings appearing in the mat.

From the above description and drawing it becomes evident that according to the invention a novel device for strip-provided driving mats for snow vehicles, by which a row of problems existent in present driving mats have been eliminated. It is obvious that the shown and described embodiment is an example only of realisation of the invention and that this can be changed and modified within the frame of the subsequent patent claims without departing from the inventive idea.

## Claims

1. Device in mats or driving belts for snow vehicles, onto which mats strips or rails extending transversely to the direction of motion of the mat are fixed, **characterised** in that the rail comprises a fixing device (12, 14, 18) which is guided from the underside of the mat (10) through a through-passing hole in the mat and disposed permanently secured to the driving mat (10), and a grab profile (16) which is detachably attached to the fixing device, which projects sufficiently over the surface of the mat to take up the grab profile and a fixing means such as a nut (20) bearing against the surface of the grab profile.

2. Device according to the claim 1, characterized in that the fixing device comprises a washer plate (12) arranged on the one side of the driving mat (10) and a fixing part (14) arranged on the opposite side of the driving mat, which parts are joined together by means of fixing members in such a way that they are permanently fixed to the driving mat.

3. Device according to claims 1 or 2, characterized in that the grab profile (16) has a weakened portion at the transition to the fixing device (12, 14, 18), which weakened portion is devised to constitute an indication of fracture when the load on the grab profile (16) surpasses a predetermined value.

4. Device according to any of claims 1 through 3, characterized in that the fixing device (14) is formed with a recess (24) intended to receive a correspondingly shaped projection (26) on the grab profile (16) for fixing said parts to each other.

5. Device according to any of the claims 2 through 4, characterized in that the grab profile (16) is attached to the fixing device (12, 14, 18) by means of the same fixing member (18) which holds the parts of the fixing device (12, 14) together.

6. Device according to any of the claims 1 through 5, characterized in that the grab profile (16) has a curved or vaulted shape with the concave surface facing to the direction of motion of the driving mat during forwards travel of the vehicle.

7. Device according to any of the claims 2 through 6, characterized in that the surface of the fixing part (14) and the washer plate (12) facing the driving mat (10) are curved so that the driving mat at the places of attachment for these parts is given a curved preload preferably with the same radius as that of turning wheels in a driving mechanism for the driving mat.

8. Device according to any of the claims 1 through 7, characterized in that the grab profile (16) is shaped as an L, one shank of said L being fixed to the fixing device (12, 14, 18) and its other shank forming a clutch (22) devised to transfer the motion force of the driving mat to the ground (Y).

9. Device according to claim 8, characterized in that the weakened portion (28) of the grab profile (16) is located in that portion of the grab profile where the clutch (22) passes over to the fixing shank.

10. Device according to the claim 5, characterized in that the washer plate (12) and the fixing part (14) are kept together by a bolt (18) threaded into the fixing part (14) and that said bolt projects over the fixing part and takes up the grab profile (16) which is fixed onto the fixing part (14) by means of a nut (20) threaded upon said bolt.

## Patentansprüche

1. Vorrichtung in Matten oder Antriebsriemen für Schneefahrzeuge, an der quer zur Bewegungsrichtung der Matte verlaufende Streifen bzw. Leisten befestigt sind, dadurch gekennzeichnet, daß die Leiste eine Befestigungsvorrichtung (12, 14, 18) und ein Greiferprofil (16) aufweist, von denen die Befestigungsvorrichtung von der Unterseite der Matte (10) aus durch ein Durchgangsloch in der Matte geführt und an der Antriebsmatte (10) permanent befestigt ist und von denen das Greiferprofil (16) an der Befestigungsvorrichtung lösbar befestigt ist, die über die Oberfläche der Matte weit genug vorsteht, um das Greiferprofil und ein Befestigungsmittel wie z.B. eine Mutter (20) aufzunehmen, die an der Oberfläche des Greiferprofils anliegt.

2. Vorrichtung nach Anspruch 1, dadurch gekennzeichnet, daß die Befestigungsvorrichtung eine auf einer Seite der Antriebsmatte (10) angeordnete Unterlagsscheibe (12) und ein auf der gegenüberliegenden Seite der Antriebsmatte angeordnetes Befestigungsteil (14) aufweist, wobei diese Teile durch Befestigungsglieder so miteinander verbunden sind, daß sie an der Antriebsmatte permanent befestigt sind.

3. Vorrichtung nach Anspruch 1 oder 2, dadurch gekennzeichnet, daß das Greiferprofil (16) an der Übergangsstelle zu der Befestigungsvorrichtung (12, 14, 18) einen geschwächten Abschnitt besitzt, der so ausgelegt ist, daß er einen Bruch anzeigt, wenn die auf das Greiferprofil (16) ausgeübte Kraft einen vorgegebenen Wert überschreitet.

4. Vorrichtung nach einem der Ansprüche 1 bis 3, dadurch gekennzeichnet, daß die Befestigungsvorrichtung (14) mit einer Ausnehmung (24) versehen ist, die zur Aufnahme eines entsprechend geformten Vorsprunges (26) am Greiferprofil (16) dient, um diese Teile aneinander zu befestigen.

5. Vorrichtung nach einem der Ansprüche 2 bis 4, dadurch gekennzeichnet, daß das Greiferprofil (16) an der Befestigungsvorrichtung (12, 14, 18) mit Hilfe des gleichen Befestigungsgliedes (18) befestigt ist, das die Teile der Befestigungsvorrichtung (12, 14) zusammenhält.

6. Vorrichtung nach einem der Ansprüche 1 bis 5, dadurch gekennzeichnet, daß das Greiferprofil (16) eine gekrümmte Form hat, deren konkave Fläche während einer Vorwärtsbewegung des Fahrzeuges in Bewegungsrichtung der Antriebsmatte zeigt.

7. Vorrichtung nach einem der Ansprüche 2 bis 6, dadurch gekennzeichnet, daß die Oberfläche des Befestigungsteiles (14) und der Unterlagsscheibe (12), die der Antriebsmatte (10) zugewandt sind, gekrümmt sind, so daß der Antriebsmatte an den Befestigungsstellen für diese Teile eine gekrümmte Vorspannung verliehen wird, und zwar vorzugsweise mit dem gleichen Radius wie dem der umlaufenden Räder in einem Antriebsmechanismus für die Antriebsmatte.

8. Vorrichtung nach einem der Ansprüche 1 bis 7, dadurch gekennzeichnet, daß das Greiferprofil (16) als L geformt ist, wobei ein Schenkel des L an der Befestigungsvorrichtung (12, 14, 18) festgelegt ist und der andere Schenkel eine Kupplung (22) bildet, die die Bewegungskraft der Antriebsmatte auf den Erdboden (Y) überträgt.

9. Vorrichtung nach Anspruch 8, dadurch gekennzeichnet, daß der geschwächte Abschnitt (28) des Greiferprofiles (16) in demjenigen beschnitt des Greiferprofils angeordnet ist, in dem die Kupplung (22) in den Befestigungsschenkel übergeht.

10. Vorrichtung nach Anspruch 5, dadurch gekennzeichnet, daß die Unterlagsscheibe (12) und das Befestigungsteil (14) durch eine Schraube (18) zusammengehalten werden, die in das Befestigungsteil (14) eingeschraubt ist, und daß die Schraube über das Befestigungsteil vorsteht und das Greiferprofil (16) aufnimmt, welches an dem Befestigungsteil (14) mittels einer auf die Schraube aufgeschraubten Mutter (20) befestigt ist.

## Revendications

1. Dispositif destiné aux feutres ou courroies d'entraînement des véhicules de déplacement sur neige, des bandes ou rails placés transversalement à la direction de déplacement du feutre étant fixés sur le feutre, caractérisé en ce que le rail comporte un dispositif (12, 14, 18) de fixation qui est guidé depuis la face inférieure du feutre (10) par un trou de passage formé dans le feutre et qui est fixé de manière permanente sur le feutre d'entraînement (10), et un profilé (16) d'accrochage qui est fixé de façon amovible au dispositif de fixation et qui dépasse suffisamment de la surface du feutre pour tendre le profilé d'accrochage et un dispositif de fixation, tel qu'un écrou (20), qui est en appui contre la surface du profilé d'accrochage.

2. Dispositif selon la revendication 1, caractérisé en ce que le dispositif de fixation comporte une plaque (12) à rondelle placée d'un côté du feutre d'entraînement (10) et une partie (14) de fixation placée de l'autre côté du feutre d'entraînement, ces parties étant raccordées par des organes de fixation afin qu'elles soient fixées de manière permanente au feutre d'entraînement.

3. Dispositif selon la revendication 1 ou 2, caractérisé en ce que le profilé d'accrochage (16) a une partie affaiblie à la transition avec le dispositif de fixation (12, 14, 18), cette partie affaiblie étant destinée à donner une indication relative à la fracture lorsque la charge appliquée au profilé d'accrochage (16) dépasse une valeur prédéterminée.

4. Dispositif selon l'une quelconque des revendications 1 à 3, caractérisé en ce que le dispositif de fixation (14) a une cavité (24) destinée à loger une saillie (26) de forme correspondante du profilé d'accrochage (16) pour la fixation des parties les unes aux autres.

5. Dispositif selon l'une quelconque des revendications 2 à 4, caractérisé en ce que le profilé d'accrochage (16) est fixé au dispositif de fixation (12, 14, 18) par le même organe (18) de fixation qui maintient en coopération les parties du dispositif de fixation (12, 14).

6. Dispositif selon l'une quelconque des revendications 1 à 5, caractérisé en ce que le profilé d'accrochage (16) a une forme courbe ou voûtée, la surface concave étant tournée dans la direction de déplacement du feutre d'entraînement lors du déplacement du véhicule vers l'avant.

7. Dispositif selon l'une quelconque des revendications 2 à 6, caractérisé en ce que la surface de la partie de fixation (14) et la plaque à rondelle (12) tournée vers le feutre d'entraînement (10) sont courbes afin que le feutre d'entraînement, aux emplacements de fixation de ces parties, ait une charge préalable de courbure de préférence de même rayon que les roues d'entraînement en rotation dans un mécanisme d'entraînement du feutre d'entraînement.

8. Dispositif selon l'une quelconque des revendications 1 à 7, caractérisé en ce que le profilé d'accrochage (16) a une forme en L, une branche du L étant fixée au dispositif de fixation (12, 14, 18) et l'autre branche formant une griffe (22) destinée à transférer la force de déplacement du feutre d'entraînement au sol (Y).

9. Dispositif selon la revendication 8, caractérisé en ce que la partie affaiblie (28) du profilé d'accrochage (16) est placée dans la partie du profilé d'accrochage dans laquelle la griffe (22) passe sur la branche de fixation.

10. Dispositif selon la revendication 5, caractérisé en ce que la plaque à rondelle (12) et la partie de fixation (14) sont maintenues en coopération par un boulon (18) vissé dans la partie de fixation (14), et en ce que le boulon dépasse au-dessus de la partie de fixation et maintient le profilé d'accrochage (16) qui est fixé à la partie de fixation (14) par un écrou (20) vissé sur le boulon.